# EUROPEAN PATENT APPLICATION

(11) **EP 3 719 150 A1**
(43) Date of publication of application: **07.10.2020**
(21) Application number: 20175110.4
(22) Date of filing: 11.03.2016
(51) Int. Cl.: C22B 3/16, C22B 3/12

(54) **PROCESS FOR SELECTIVE RECOVERY OF CHALCOPHILE GROUP ELEMENTS**

(30) Priority: 11.03.2015 AU 2015900865
(62) Divisional of application: 16760941.1
(71) Applicant: Curtin University, Bentley, WA 6102 (AU)
(72) Inventor: Eksteen, Jacobus Johannes, Bull Creek, Western Australia 6149 (AU); Oraby, Elsayed Abdelrady, Cannington, Western Australia 6107 (AU)
(74) Representative: Nederlandsch Octrooibureau

(57) **Abstract**

A process for the selective recovery of at least one Chalcophile Group Element ("CPM") as herein defined from a material containing the CPM and one or more non Chalcophile Group Elements ("NCE") as herein defined, said process including: contacting the material with an alkaline solution containing a lixiviant comprising an amino acid or derivative thereof in order to selectively leach the CPM from the material to produce a CPM containing leachate and a NCE containing residue; and recovering the CPM from the leachate.

## Description

### TECHNICAL FIELD

A process is disclosed for the selective extraction and recovery of a range of elements that belong to an economically important group of elements, herein defined as "chalcophile group elements", over other less economically important elements. The process may be used for selective recovery from ores, or ore concentrates. However, the disclosure is to be broadly interpreted, in that the process may be used for selective recovery from other metal containing materials, such as process intermediates and/or secondary or waste materials.

### BACKGROUND ART

Many economically significant elements are locked in mineral or rock matrices in nature with significant amounts of acid consuming minerals and other non-economic or gangue elements. If the target metals are of a high enough grades in the ore and mineralised predominantly as sulfides, they are amenable to beneficiation and upgrading by flotation followed by subsequent smelting and refining, which is the conventional metallurgical process to treat sulfides. However, due to exhaustion of high grade ore resources and reserves amenable to the conventional mine-mill-float-smelt-refine processing, various hydrometallurgical approaches have been evaluated. Where a mineral concentrate can be produced from an ore, another processing option may be to replace the smelting step (which is capital intensive) with a hydrometallurgical step. Hydrometallurgical processing often includes leaching in the acidic region or, (less commonly) in the alkaline region. While alkaline leaching has been used previously to leach some metals, such as gold and copper, from ores, there has been very little success in leaching other metals in alkaline solutions, other than by the toxic compounds such as ammonia and cyanide, and because of the large quantities of ammonia or cyanide required, with commensurate cost and safety implications, these alternative processes have not had much industrial application.

Except for gold and silver leaching, alkaline cyanide leaching has never gained wide acceptance. As gold and silver ores become more mineralogically complex and the relative inability to sufficiently recover the (cyanide) reagent, (particularly due to the many deportment and conversion reactions of cyanide), even cyanide is being reviewed as an acceptable lixiviant. As many metal sulfides are cyanicides (cyanide destroyers) and cyanide is easily destroyed using stronger oxidants (such as hydrogen peroxide), cyanide consumption tends to be very high with complex ligand chemistry where multiple cyanide complexes are possible and changes between the complexes are sensitive to cyanide to metal ratios and pH. The formation of thiocyanate, cyanate, ferrocyanide/ferricyanide and volatile hydrocyanic acid all contribute to loss mechanisms of cyanide, making for poor lixiviant recovery in some systems. In addition, cyanides, such as sodium cyanide, and cyanides of other alkali (such as potassium) metals and alkali earth metals (such as calcium), pose a number of challenges, principally due to their toxicity, regulatory restrictions, high carbon footprint and low selectivity in low grade ores.

The current alternative lixiviants to cyanide also pose many challenges. Despite sodium thiosulfate being proposed as an alternative lixiviant for gold, it is expensive, it requires additional copper (as Cu²⁺) as an oxidant (if not already present in the gold ore) and volatile and noxious ammonia to stabilise the leaching system. It is applicable to only a limited number of gold ores. Further, it cannot economically be produced at site, it requires complex downstream separation and it is not biodegradable.

Ammonia leaching per se has not gained acceptance except for a few niche cases, and has been found to be unsuitable for whole-ore leaching. Ammonia (the lixiviant) can vaporise, be oxidised, is poisonous, and much of it is required, whilst at the same time, the solubility of ammonia gas in water is limited and decreases with temperature. (As used herein, the reference to "ammonia" includes ammonium hydroxide).

In contrast to the above mentioned alkaline processes, the acidic leach processes have been more commonly employed. These acidic processes have numerous problems, and the most commonly used acid, sulfuric acid (either added or produced during sulfide oxidation) will be discussed below:
- In biological oxidation processes during leaching target metal sulfides are oxidised and dissolved in acidic media. It is important to maintain the pH below 3 to ensure that the main oxidant (ferric iron) remains dissolved. Above this pH the ferric is precipitated and the oxidant is lost from solution.
- Many mineral deposits contain many acid consuming and alkaline minerals such as calcite, magnesite, dolomite, trona, siderite, etc., consuming the acid and raising the pH that may lead to unwanted and unintended metal precipitation. This is particularly problematic in systems where pH may vary in time and spatial direction, such as in heap, dump, vat and in-situ leaching.
- In the pH region (pH<2) where oxygen and ferric iron are effective oxidants, significant dissolution of silica (SiO₂), magnesium, iron and aluminium is possible. These reactions consume acid, but more problematically, these compounds are sensitive to pH variation, with the potential to precipitate as gelatinous precipitates that cannot be efficiently separated from the target metal containing mother liquor.
- As most ore deposits contain significant amounts of calcium, the reaction with sulfuric acid produces a gypsum precipitate which increases the viscosity and may lead to lowering of the porosity of heaps and in-situ leach systems.
- When acids come in contact with carbonate minerals they release carbon dioxide. This is problematic in in-situ leaching where gas bubbles may block pores.
- Many sulfides co-produce elemental sulfur as a leach product. This elemental sulfur can severely passivate target minerals and metals to be leached, or stop leaching altogether. It is particularly problematic when precious metals are associated with sulfides. Elemental sulfur can also lead to pore blockages in systems dependent on good ore porosity.
- Acids are often indiscriminate in their dissolution action, often dissolving significant amounts of non-target metals. This leads to poorer control of solution chemistry.
- Materials of construction tend to be problematic. Oxygenated aqueous sulfuric acid is highly corrosive to most metallic materials of construction.
- Hydrogen peroxide is not an effective oxidant in acidic media as it tends to decompose very quickly (faster than the required oxidation rate) to release oxygen.
- Electrowinning processes (from sulfate solutions) have to deal with acid mist generation during metal recovery processes.
- Sulfide precipitation processes have to deal with the risk of highly poisonous and noxious hydrogen sulfide formation in acidic medium.

Other acidic media such as hydrochloric acid with NaOCl, chlorine or oxygen as oxidants are highly corrosive and also tend to be indiscriminate in their dissolution of minerals. Even more gangue minerals are soluble in hydrochloric acid (compared to sulfuric acid), thereby releasing even more unwanted species into solution. Neutralisation of excess acid is problematic as the chloride ion that remains in the leach circuit remains soluble and tends to accumulate in leach systems.

Other acids (nitric, hydrofluoric, phosphoric, other halogen acids) have problems with noxious vapours, decomposition, price, availability, neutralisation ability, materials of construction, etc.

Most acids are either indiscriminate in mineral dissolution, or do not have sufficient selective complexing ability, or have significant problems with reagent recovery and recycle. Occupational safety, health and environmental aspects, while being dealt with as a matter of necessity, tend to be much more problematic in acidic media, particularly for metal recovery processes such as electrowinning and sulfide precipitation. The solubility of silica and the potential of gel precipitation together with other gelatinous precipitates from dissolved iron and alumina, creates large problems with potential "crud" formation in solvent extraction circuits or sticky/slimy coatings onto IX resin beads which may retard the efficiency of the extraction and refining operations.

The above references to the background art do not constitute an admission that the art forms a part of the common general knowledge of a person of ordinary skill in the art. The above references are also not intended to limit the application of the apparatus and method as disclosed herein.

### SUMMARY OF THE DISCLOSURE

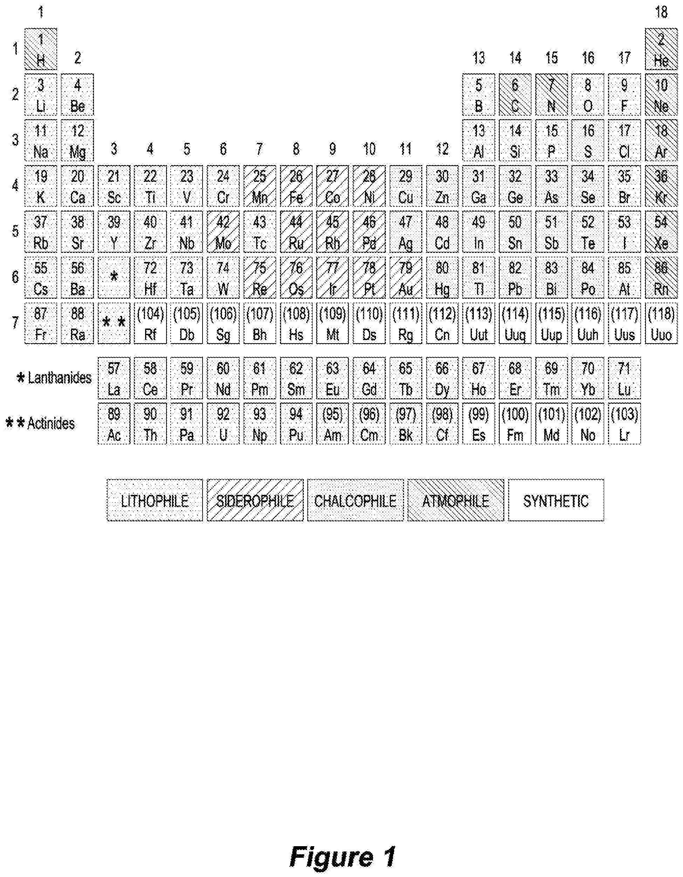

In order to facilitate discussion of the present disclosure, reference will be made to the Goldschmidt classification of the Periodic Table, which is a geological, rather than chemical, classification of the elements. The Goldschmidt Periodic Table is set out in Figure 1.

The Goldschmidt Periodic Table classifies the elements into 5 broad groups: Lithophile ("rock"-loving / rock forming or silicate-loving elements), Siderophile (iron-loving), Chalcophile (sulfur/sulfide-loving), Atmophile and Synthetic. The present discussion will focus on the Chalcophile (cp) and Siderophile (sp) transition metals.

The present disclosure is based on the surprising discovery that a group of elements comprising respective members of the chalcophile elements and the siderophile elements, (herein after collectively referred to as "Chalcophile Group Elements", or "CPMs") can be selectively leached over non- Chalcophile Group Elements (or "NCEs") by leaching using an alkaline solution containing an amino acid or derivative thereof as the primary lixiviant. The leach may occur with or without the use of a catalyst. Alkaline amino acid leaches can progress without the aid of the catalysts, but the use of small amounts of catalyst may improve the rate of leaching and lower the temperature at which high leach rates (with amino acids) can be obtained.

The CPMs, and their respective Goldschmidt classifications, include cobalt (sp), nickel (sp), copper (cp), zinc (cp), rhodium (sp), palladium (sp), gold (sp), silver (cp), cadmium (cp), indium (cp), iridium (sp), platinum (sp), mercury (cp), gallium, (cp), germanium (cp), arsenic (cp), bismuth (cp), tin (cp), lead (cp) and thallium (cp).

The inventors have recognised that the siderophile members of the CPMs listed above also have a high affinity for sulfur in addition to their affinity for iron (as alloys), and tend to be more noble or less reactive (LR) particularly with respect to their affinity for oxygen to form oxides. Some other metals (iron, molybdenum, manganese, ruthenium, osmium, rhenium) are also classified as siderophiles in the Goldschmidt classification system, but are more reactive (MR) siderophiles. These more reactive (MR) siderophiles have a high affinity for oxygen and tend to form stable oxides, compared to the less reactive (LR) / more noble siderophiles in the same rows of the periodic table. The divide between the LR and MR siderophiles is therefore between Groups 8 and 9 of the Periodic Table, with the LR siderophiles to the right of that line and the MR siderophiles to the left of that line.

The CPMs therefore comprise the LR siderophiles and the chalcophiles up to and including some of the Group 14 elements of the Periodic Table. In other words, the CPMs comprise: Co, Ni, Cu, Zn, Ga, Ge, Rh, Pd, Ag, Cd, In, Sn, Ir, Pt, Au, Hg, Tl, Pb and Bi. In an embodiment, the CPMs may comprise: Co, Ni, Zn, Ga, Ge, Rh, Pd, Ag, Cd, In, Sn, Ir, Pt, Hg, Tl, Pb and Bi. In another embodiment, the CPMs may comprise: Co, Ni, Zn, Ga, Ge, Rh, Pd, Cd, In, Sn, Ir, Pt, Hg, Tl, Pb and Bi. In a further embodiment, the CPMs may comprise Co, Ni, Zn, Ga, Ge, Cd, In, Sn, Hg, Tl, Pb, Bi.

In one embodiment, the CPMs may comprise siderophile and chalcophile elements in Periodic Table Groups 9-12 (the version of the Periodic Table is shown in Figure 1)..

In another embodiment, the CPMs may include siderophile elements in Periodic Table Groups 9 and 10. The CPMs may additionally or instead comprise chalcophile elements in Group 12.

The non-Chalcophile Group Elements (NCEs) comprise all elements that are not members of the CPMs and comprise:
- MR-siderophiles
- the lithophiles (lp) (the "rock"-loving / rock forming or silicate-loving elements), form the major components of the earth's crust, and are often found as oxides, carbonates, silicates, aluminosilicates, and hydroxylated silicates or minerals containing halogen groups (fluoride and chloride in particular). They constitute the major gangue mineral (i.e. waste mineral) components in ores where the scarce metals of the chalcophile metals (CPMs) are targeted for economic recovery. The lithophiles include:
   ∘ the alkali metals (lithium, sodium, potassium, i.e. elements of Group 1 of the Periodic Table);
   ∘ alkaline earth metals (beryllium, magnesium, calcium, strontium, barium, i.e. elements of Group 2);
   ∘ the lanthanides ("Rare Earths"), the actinides (including uranium and thorium) and the reactive and oxygen-loving metals (forming very stable oxides) such as Groups 3 - 8 in the Periodic Table.
- The elements normally associated with non-metals as normally found in Groups 13 to 18 in the Periodic Table (PT), to the right (larger Group Numbers) of the semi/half metallic elements (the semi-metals being boron, silicon, arsenic, and tellurium); and
- Other lithophile elements such as boron, aluminium, silicon, phosphorus, oxygen, and the halogens.

In a first aspect there is disclosed a process for the selective recovery of at least one Chalcophile Group Element ("CPM") as herein defined from a material containing the CPM and one or more non Chalcophile Group Elements ("NCE") as herein defined, said process including:
(i) contacting the material with an alkaline solution containing a lixiviant comprising an amino acid or derivative thereof in order to selectively leach the CPM from the material to produce a CPM containing leachate and a NCE containing residue; and
(ii) recovering the CPM from the leachate.

As used herein, the term "amino acid" means an organic compound containing both a carboxyl (-COOH) and an amino (-NH₂) functional group. In many cases, the amino acid contains a -CHR or CH₂ group. In most cases the amino (-NH₂) group and the carboxyl (-COOH) group connects to the same -CHR or -CH₂ connecting group and are referred to primary α-amino-acids. The "R" group in the -CHR connecting group can take on any organic structure, such as aliphatic hydrocarbon groups to complex organic structures including aromatic groups, heterocyclic groups, and poly-nuclear groups or various other organic groups. In its simplest form, the R-group is only hydrogen, in which case the molecule reverts to the simplest primary α-amino-acid, called glycine.

The material containing the CPM and one or more NCEs may comprise an ore or an ore concentrate (herein collectively referred to as "ore" for easy discussion). The material may alternatively comprise a waste material, including mining waste such as tailings, industrial waste such as fly ash, or electronic waste ("e-waste"), such as computers, keyboards, televisions, mobile phones, etc. While the following discussion will focus on the use of the selective recovery process for treating ores, it is to be understood that it is not limited thereto and is applicable to all solid CPM-containing materials.

The CPMs most often occur as sulfide minerals in ores, although oxides, arsenides, sulfo-arsenides, native metals, sulfates, carbonates, chlorides, silicates, hydroxylated-salts and hydroxide minerals of the CPMs may also occur commonly. The natural minerals of these CPMs are often hosted as small mineral grains in silicate host rocks (the matrix), that also contain metal oxides and carbonates of the alkaline earth metals and the Lithophile (lp) metals (metals in Groups 3-6). In hydrometallurgy these lithophile (lp) and reactive metals are either quite refractory to leaching in moderately alkaline solution or, if soluble, are unwanted in leach liquors where CPMs from Group 9-12 are targeted for economic recovery. As used herein, a "moderately alkaline solution (MAS)" refers to aqueous solutions with a pH range of between 7 and 13. These minerals of the lithophile (lp) and more reactive siderophiles (MR sp) are often wholly or partially acid soluble. In addition many of these lithophiles also become soluble in strongly alkaline (pH>13) solutions.

The mineral groupings, as pertaining to the invention, therefore are:
- Lithophile metals and their minerals (lp)
- Less reactive siderophile (LR-sp)
- More reactive siderophile (MR-sp)
- Chalcophile metals and minerals (cp)
- Chalcophile Metals including Less reactive siderophiles (CPM = cp + LR-sp)

It would be therefore be desirable to have a process that selectively leaches the CPMs in a moderately alkaline solution (MAS) in a pH range of 7<pH<13, whilst not dissolving the MR sp and lp components, which would lead to uneconomic reagent consumption and treatment costs.

In addition, it would also be desirable if the reagent used to perform the leaching of the CPMs could be recovered in a simple and economic manner, and recycled for reuse.

Moreover, it is desirable that minerals from metals in Groups 1-8 do not significantly react and consume leaching reagents or alter pH or oxidation-reduction potential ("ORP" or "Eh") of the reacting system. Once leached, it is also desirable that CPMs can be recovered from solution using a range of processes known to those skilled in the art. In addition, due to the cost of most reagents, it is desirable that recovery of the reagents can be achieved without degradation of the reagents. This may comprise the reagents being retained or restored to their original state using either much cheaper reagents or energy (such as in electrowinning).

Accordingly, there is disclosed a process for the selective recovery of at least one CPM by leaching with an alkaline solution containing an amino acid or a salt thereof. The salt may be an alkali metal salt, for example, a sodium or potassium glycinate. Alternatively, the salt may be an alkaline earth salt (for example its calcium salt).

The alkaline solution may contain more than one amino acid or salt thereof.

The alkaline solution may also contain an oxidant, such as where the CPM is present in a form/compound/mineral that requires oxidation to obtain the CPM in its oxidised state and any bonded non-metal or semi-metal (such as sulfur, arsenic, bismuth, antimony) into its oxidised anionic state (for example, but not limited to, sulfur to sulfate, arsenic to arsenate, antimony to antimonite) Conversely, where the CPM is present in an oxidised form, such as an carbonate, oxide, sulfate or hydroxide, an oxidant may not be required.

The alkaline solution should preferably be substantially free of intentional additions of detrimental species such as thiosulfate or ammonia containing species, for the reasons set out under "Background Art" above. In most cases, this will mean that the alkaline solution is substantially free of those detrimental species. However, there may be cases where those detrimental species arise in situ in solution due to unintended reactions in solution.

Accordingly, in a second aspect there is provided a process for the selective recovery of at least one Chalcophile Group Element ("CPM") as herein defined from a material containing the CPM and one or more non Chalcophile Group Elements ("NCE") as herein defined, said process including:
(i) contacting the material with an alkaline lixiviant that is substantially free from added thiosulfate or ammonia and that contains an amino acid or salt thereof in order to selectively leach the CPM from the material to produce a CPM containing leachate and a NCE containing residue; and
(ii) recovering the CPM from the leachate.

While the amino acid or amino acid salt is an effective lixiviant on its own, the alkaline solution may additionally include a small amount of a catalyst which enhances the leaching function of the amino acid or its salt and/or may reduce the temperature requirements for the leaching process. Thus the primary lixiviant is still the amino acid or its salt. The catalyst may comprise one or more of the following species: iodine and/or iodide mixtures, bromine and/or bromide mixtures, thiourea, copper salts, and cyanide in its various salts, or mixtures of these species. In one embodiment, the catalyst comprises a cyanide salt (such as sodium cyanide). In another embodiment, the catalyst is the sparsely soluble copper cyanide (CuCN) which become soluble in an alkaline glycine environment and catalyses the leaching of the CPM. The catalyst may increase the rate of leaching the CPM. The catalyst may particularly increase the rate of leaching of precious metals, as well as chalcophile base metals.

In all cases where the catalyst is added, the weight ratio of amino acid to the catalyst is greater than 2:1 (conversely, the catalyst preferably does not make up more than 33 weight% of the combined mass of amino acid and catalyst). The weight ratio of amino acid to the catalyst may be greater than 3:1. However, typically the ratio of amino acid (e.g. glycine) to the catalyst is higher, such as a minimum of 10:1. In an embodiment, the minimum weight ratio of amino acid to the catalyst is 100:1. The weight ratio may be as high as 1000:1, particularly where high ratios of CPM base metals (e.g. Ni, Cu, Co, Zn, Pb) to CPM precious metals (Au, Ag Pt, Pd, Rh, Ir) are present.

The catalyst concentration in the alkaline solutions may be a maximum of 300 ppm (or 300 milligram / kg solution) whereas typical minimum amino acid concentrations are greater than 1200 milligram per kg solution. As catalysts can be expensive, irrecoverable or toxic, it is normally aimed to minimise their use in a mixed system insofar as only to increase the rate of the amino acid leach reaction. In contrast, the amino acid is the lixiviant and "carrier" of the metal in solution and therefore needs to be present in greater concentration. Accordingly, the catalyst is present in lesser quantity than the amino acid lixiviant.

In an embodiment, the selective leaching of the CPMs leaves the bulk of the pre-existing NCE minerals of the host rock/ore/concentrate in the leach residue.

In an embodiment, the leaching may take place "in situ" or "in place" (i.e., in the underground rock mass through use of a well-field). In another embodiment, the leaching may comprise dump leaching, such as by leaching blasted but uncrushed particles typically smaller than 200 mm. In another embodiment, the leaching may comprise heap leaching, such as by leaching coarse crushed particles typically smaller than 25 mm. In another embodiment, the leaching may comprise vat leaching, such as by leaching fine crushed, particles typically smaller than 4 mm. In another embodiment, the leaching may comprise agitated tank leaching, such as by leaching milled material having particles typically smaller than about 0.1 mm/100 micrometre. In another embodiment, the leaching may take place in pressure leaching autoclaves and may comprise leaching particles that are typically smaller than 100 micrometre.

The process involves the use of amino acids or their salts (especially alkali metal / alkaline earth salts). The amino acid may comprise an alpha amino acid. The amino acid may comprise one or more of Glycine, Histidine, Valine, Alanine, Phenylalanine, Cysteine, Aspartic Acid, Glutamic Acid, Lysine, Methionine, Serine, Threonine, and Tyrosine.

In an embodiment, the amino acid may be glycine (Gly) (chemically defined by the formula NH₂CH₂CO₂H). Glycine is a simple amino acid that is easy and cheap to produce on an industrial scale with the highest probability of industrial use. The following discussion will focus on the use of glycine and its salts as the amino acid, however, it is to be understood that the invention extends to other amino acids. "Glycine" may refer to the amino acid commonly known by this name, or any of its alkaline metal salts (such as sodium or potassium glycinate). Other common names for glycine include aminoacetic acid or aminoethanoic acid. In an embodiment, the amino acid is provided in an aqueous solution of an alkali, or alkaline earth, metal hydroxide (such as sodium or potassium hydroxide or calcium hydroxide).

Glycine and/or its salts are the preferred amino acid because of their:
- large scale production and bulk availability;
- low cost of production;
- ease of transport;
- low price; and
- low molecular weight.

While other amino acids may be used instead of (or in addition to) glycine, they are typically more costly and any performance benefit often cannot be justified by the additional costs that are incurred. Glycine has a very high solubility in water, as do the CPM glycinates. It is thermally stable, and stable in the presence of mild oxidants such as dilute hydrogen peroxide, manganese dioxide and oxygen. It is non-toxic and many of the CPM glycinates have low or lower toxicity (compared their equivalent cyanides, halides or sulfates). It is an environmentally safe and stable reagent. The ability to easily regenerate, recover and reuse glycine in alkaline solutions is one of its most important attributes from an economic perspective. The alkaline nature of the leach allows cheap materials of construction such as mild steel.

The amino acid concentration in solution may vary from 0.1 to 240 grams per litre. The amino acid concentration may be a minimum of 3.75 grams per litre and in an embodiment may be a minimum of 16 grams per litre. The maximum amino acid concentration may be 60 grams per litre and in another embodiment, the amino acid concentration is a maximum of 37.8 grams per litre.

The source of alkalinity in the alkaline solution may comprise an aqueous solution of an alkali metal hydroxide, such as sodium or potassium hydroxide. The alkali metal hydroxide concentration may be a minimum of 0.4 grams per litre, such as from 0.9 grams per litre. The maximum alkali metal hydroxide concentration may be 17.4 grams per litre, and in an embodiment it is a maximum of about 10 grams per litre.

In another embodiment, the alkaline solution may comprise an aqueous solution of an alkaline earth hydroxide, such as calcium hydroxide. The alkaline earth metal hydroxide concentration may be a minimum of 0.8 grams per litre, such as from 1.5 grams per litre. The maximum alkaline earth metal hydroxide concentration may be about 20 grams per litre, and in an embodiment it is a maximum of about 15 grams per litre.

The source of alkalinity does not include ammonia, which as noted previously, is substantially absent from the alkaline solution due to toxicity and solubility issues.

The selective recovery process may be conducted over a range of temperatures. In an embodiment, the process is conducted at ambient or mildly elevated temperatures. The process may be conducted from -10 °C to 200 °C, such as from 0°C to 100°C. In one embodiment, the process is conducted at a temperature between 25 °C to 65°C.

The selective recovery process may conveniently be conducted at atmospheric pressure (from mean sea level to low atmospheric pressures at altitudes of around 6000 meters above mean sea level). However in some embodiments, the process may be conducted at elevated pressure or at a pressure below atmospheric.

In an embodiment, the oxidant may comprise a mild oxidant. The oxidant may comprise an oxygen containing gas, such as oxygen or air. In another embodiment, the oxidant may comprise a peroxide, such as a dilute aqueous solution of hydrogen peroxide.

The leaching step (i) may occur in the presence of variable amounts of dissolved oxygen which may, for example, be provided via aeration or oxygenation. Dissolved oxygen (DO) concentrations may vary from 0.1-100 milligrams per litre in solution, such as from 8 to 30 mg/L, depending on the oxygen demand (OD) of the CPMs in solution and the pressure of the leaching process.

Alternatively, or in addition, the oxidant may comprise a peroxide, such as hydrogen peroxide. The concentration of peroxide may be greater than 0.01%, such as at least 0.5%. In an embodiment, the peroxide concentration may be less than 5%, such as less than 3%.

The leaching step (i) is conducted under alkaline conditions. In an embodiment, the process is conducted using a moderately alkaline solution having a pH range of between 7 and 13. In another embodiment, the pH range is between 7 and 11.5. In another embodiment, the pH is between 8 and 10.

The process can be used with various water types, i.e. tap water, river water, sea water, as well as saline and hypersaline brines with significant dissolved salts containing sodium, magnesium, calcium, chloride, sulfate and carbonate ions in solutions.

The CPM containing material and the alkaline lixiviant react to leach the CPM into the leachate. Without wishing to be limited by theory, it is believed that leaching forms a metal glycinate complex (MGC), or a metal amino-acid complex (MAAC). As used herein, the term MGC is also meant to include MAAC. The MGC refers to glycinate complexes of the CPMs, as opposed to the NCEs. Although metal glycinate complexes of the NCEs exist in the acidic region (pH<7), these NCEs are not readily complexed in the MAS pH region (ie 7 to 13), allowing selective leaching of the CPMs.

The ratio of solid CPM containing material to the alkaline lixiviant can vary. For example, in the case of in-situ leaching, the solid to liquid ratio is likely to be high, such as up to 100:1. In agitated tank leaching the solid to liquid ratio is likely to be much lower, such as around 40:60, or 2:3, on a weight basis (i.e. 40 kg of solid to 60 kg of aqueous solution). In the case of leaching mineral concentrates, the ratio may be even lower, such as around 10 kg of solids per 90 kg of aqueous solution (ie, 1:9).

It may be beneficial to add copper salts (e.g. cupric sulfate) to the leachant during the leaching step. This addition can be beneficial when the CPMs are present in the ore as an oxidisable form, such as native metals or sulfides. However, it may not be beneficial if the CPMs are not oxidisable, such as if they are present as oxides, carbonates or silicates. Concentration of initial copper in solution from low levels up to 1 weight% (at the start of leaching) can be used. It has been found that the copper glycinate has two stable complex forms, both the cuprous and cupric glycinate, as by the following reactions:

*Cu*²⁺ + (*H*₂*NCH*₂*COO*)*⁻* ↔ *Cu*(*NH*₂*CH*₂*COO*)⁺,

*log K* = 8.6

*Cu*²⁺ + 2(*H*₂*NCH*₂*COO*)⁻ ↔ *Cu*(*N*H*₂CH₂COO*)₂,

*log K* = 15.6 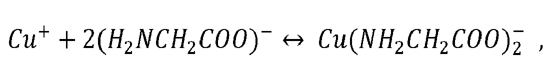 *log K* = 10.1

The stability of both the cuprous (monovalent) and cupric (divalent) states creates a very useful redox-couple, whereby the cupric glycinate complex can serve as an oxidant to oxidise minerals (particularly CPM metals and sulfides), itself being reduced to the cuprous glycinate form which, in turn, gets re-oxidised to cupric glycinate by air, oxygen (or oxygen-enriched air), hydrogen peroxide or alternative oxidants such as manganese dioxide. The mineral to be leached therefore reduces the cupric glycinate to it cuprous form, and a convenient oxidant, such as air, restores the cupric glycinate oxidant. The use of copper salts is not mandatory in this process, but may accelerate the leaching reactions.

The NCE containing residue may be separated from the CPM containing leachate using such solid-liquid separation steps as filtration, centrifuging or sedimentation. Thickening may be conducted before solid-liquid separation.

The clarified liquid from the thickener and the filtrate can be combined for metal recovery in step (ii).

Once leached, CPMs may be recovered from aqueous solution in step (ii) using one of a range of extraction steps. The CPMs are typically present in the leachate as amino acid (glycinate) complexes. The recovery step may also include regeneration of the glycine lixiviant. The amino acid can then be recycled and reused, if desired, after any required pH correction The regenerated species may be either free aqueous glycine or its aqueous glycinate anion. This step encompasses all methods which precipitate/transfer the CPM into another concentrated phase whilst regenerating the glycine lixiviant in the MAS range.

A first possible recovery step (ii) may comprise chemical recovery of the CPM such as by recovering the metal in a solid state (such as electrowon metal, hydrogen precipitated metal powders, or as a metal sulfide precipitate). The solution, stripped of its CPM is now referred to as the "barrens" or barren leach solution (BLS). The recovery step enables release of the amino acid in solution for reuse. Removal of the CPMs and/or release of the glycine may occur as stated above through the formation of various CPM solid products directly from the pregnant leach solution (PLS).

A second possible recovery step (ii) comprises recovery of the CPMs through an intermediate upgrading step where the CPM is adsorbed onto, or dissolved into, another water-insoluble (non-aqueous) phase, such as ionexchange (IX) resins, solvent extraction (SX) organic solvents, granular activated carbon (GAC), molecular recognition (MR) resins, or coated adsorbents (CA's), which may include polyethylene immine (PEI) coated diatomaceous earth, ferrofluids, and CPM-selective organic adsorbents grafted onto solid matrices.

Once CPMs are adsorbed onto/dissolved into the upgrading phase (which has a very high affinity for the CPM so that it removes/strips the CPM from the MGC in solution and releases the glycine/glycinate anion into solution), the CPM-enriched non-aqueous phase can be stripped to release the CPM again into another aqueous solution at a much increased concentration. The refined aqueous solution (RAS) can then be subjected to electrowinning, hydrogen gas precipitation, hydrolysis-precipitation or precipitation as CPM sulfides (single or mixed with other CPMs). The regenerated glycine will be in the BLS, but not necessarily in the RAS. The benefit of the second possible recovery step is that it allows refining of the targeted metal from the glycinate solution, should it be preferred.

The recovered metal can then be removed by an appropriate means. One example is to remove as electroplated / electrowon metal (EWM) from a cathode of an electrolytic cell (e.g. for Co, Ni, Cu, Ag, Zn, Cd, Pt, Pd, Rh, Ir, Au and Hg). In another example, removal is by precipitation as a mixed metal precipitate (MMP) using hydrogen gas (typically Ni, Cu, Pd, Ag, Pt, Au) and subsequent metal filtration. In another example, removal is as a sulfide precipitate through addition of hydrogen sulfide, alkali metal sulfides or alkali metal hydrogen sulfides to form stable mixed metal sulfide precipitates (MSP). MSP and MMP are convenient and sought-after process intermediates for further processing, such as industrial smelting (metals such as Co, Ni, Cu, Zn, Ag, Cd, Hg, Pb and platinum group metals). The metal sulfide or precipitated metal/alloy powders are removed from solution using sedimentation, centrifuging or filtration. This EWM, MSP or MMP stream is the saleable metal (or metal sulfide) stream.

The process may further include a preconditioning step prior to the leaching step (i). This step is optional and the need for it may depend on the type of material being treated. The preconditioning step may be described in copending patent application entitled "Preconditioning Process" in the name of applicant, the entire disclosure of which is incorporated herein by reference. The preconditioning step, treats a passivating coating on the metal containing material, with an alkaline solution of sulfurous acid and sulfite ions. The passivating coating may comprise elemental sulfur, iron oxide and/or iron hydroxide. The preconditioning step enables reactivation of the passivated surfaces of the ore to enhance leaching.

Where the alkaline leachant comprised a hydroxide solution, the process may further include a step of regenerating or restoring the hydroxide after the recovery step (ii). In the case of regenerating/restoring alkali metal hydroxide, this may be effected by addition of lime (as either calcium oxide or calcium hydroxide) to the barren leach solution. Alternatively, regeneration may be effected by addition of caustic soda (NaOH). Regeneration may be desirable, for example, where the original CPMs occurred mostly as sulfide minerals, and the sulfur in the sulfide mineral is oxidised to a mixture of sulfite (SO₃)²⁻ and sulfate (SO₄)²⁻ ions in solution. Some minor dissolution of silicate minerals might also have led to some silica dissolution as alkali metal silicates. The addition of lime or quicklime or slaked lime or milk of lime reacts with any one or more of alkali metals sulfates and sulfites, carbonates, phosphates and silicates in the barren leach solution to precipitate a mixed precipitate including one or more of insoluble or poorly soluble hydrated calcium sulfates (e.g. gypsum and anhydrite), calcium sulfite, carbonates (calcite, aragonites), phosphate (apatite, hydroxyapatite, fluorapatite or chlorapatite), phosphogypsum, calcium silicate (wollastonite) and dicalcium silicate. Often traces of lithophile metals which might have dissolved during the primary leaching stage are also co-precipitated with this mixed calcium rich precipitate. In the process, alkali metal hydroxide (sodium or potassium hydroxide) is regenerated and the pH for leaching is reestablished, prior to recycle to the leach reactor (heap/tank/in-situ, etc.). In the case where caustic soda solution is added instead of lime, the sulfates/sulfites may need to be removed with an alternative technology such as nano-filtration, to prevent accumulation in the recycle. Other combinations of lime and caustic are also possible, e.g. to precipitate the sulfates with lime and do the final pH adjustment with caustic soda.

The calcium rich mixed precipitate may then be separated by solid-liquid separation such as filtration, centrifuging or sedimentation, preceded by thickening or counter current decantation, if necessary. In this manner, the barren leach solution may have its amino acids regenerated as well as its hydroxide regenerated for reuse.

The regenerated hydroxide and/or amino acid containing aqueous solution, herein referred to as the restored/regenerated barren solution or "RBS", may then be recycled to the leaching step (i). Small amounts of sodium phosphate may be used to remove the last traces of calcium in the RBS, if required.

CPM sulfide minerals often have arsenic present in small but significant amounts, in mineral forms such as enargite and arsenian pyrite and arsenopyrite (among others). Arsenic can be problematic in alkaline solutions as it remains quite stable in solution (as arsenite/arsenate) and may cause environmental problems. To prevent the accumulation of arsenic in the PLS, BLS and RBS, a number of potential options exist, such as:
∘ Selective removal from the RBS using nano-filtration of calcium arsenite/arsenate either from the main process stream or a bleed stream from the main stream.
∘ Addition of a small amount of lead nitrate which will precipitate the arsenic as the highly insoluble lead arsenate.
∘ Removing a bleed solution of the RBS (sufficient to prevent the accumulation of arsenate) and acidify the solution to mildly acidic (pH of around 3) and precipitate the arsenic as iron/ferric arsenate (the mineral scorodite) using ferric chloride or ferric sulfate. The whole RBS solution does not have to be treated, only a small bleed stream.
∘ Precipitation as sodium arseno-sulfide with elemental sulfur and NaSH.

If environmentally deleterious and toxic mercury, cadmium and/or thallium are present in the ore, they may be also solubilised in the alkaline glycine solution. If the CPMs are recovered by precipitation as sulfides (using, for example, hydrogen sulfide, sodium hydrogen sulfide (NaSH) or sodium sulfide), cadmium, mercury and thallium sulfides may also co-precipitate. If so, they may become penalty elements if the mixed chalcophile metal sulfide precipitates are sold to smelters and refiners. However, these downstream smelters and refiners often have sufficient treatment and recovery technologies to remove and recover these more toxic CPMs. Hydrogen precipitation of CPMs from solution may lead to a MMP contaminated with some of the unwanted/deleterious CPMs. However, selective SX, IX and the use of selective adsorbents may limit the deportment of the deleterious CPMs so that these metals do not contaminate the targeted CPMs, if intermediate upgrading and refining steps are used prior to electrowinning or precipitation of the targeted CPMs.

The disclosed selective recovery process described above can be applied to most mineral resources and process intermediates containing CPMs, but has particular benefits where the host rock / material has significant amounts of alkaline minerals such as calcite, dolomite, trona and other acid consuming minerals (in addition to the conventional rock forming silicate minerals), which can make conventional acid-based leach processes uneconomical. It also has particular use for ores with significant iron mineralisation, be it sulfide (e.g. pyrite, pyrrhotite, marcasite), oxide (hematite, magnetite, maghemite), hydroxide and hydroxi-oxide (goethite, limonite, iron hydroxide), of basic sulfate salts (such as jarosites). These iron minerals would have partially leached in acidic medium, whilst remaining quite stable in alkaline medium, and not consuming any significant amounts of reagents (in alkaline medium). The CPMs form stable MGC's, whilst the NCE's do not form stable metal-glycinate complexes allowing differential dissolution and precipitation.

In acidic leach processes aluminium, magnesium and silica often dissolve to a significant extent. Magnesium is very difficult to remove from aqueous solution and aluminium and dissolved silica may lead to the precipitation of gelatinous precipitates with small changes in pH, leading to very difficult solid-liquid separation and significant pregnant leach solution (PLS) losses with the filter residue and creating environmentally hazardous leach residues. Conversely, leaching in alkaline media prevent the precipitation of gels, whilst magnesium and alumina are not significantly dissolved if the alkaline pH is kept between 7 and 13, or in the MAS range. Minor amounts of silica do dissolve but no gel formation risk is present. The dissolved silica (as silicates) can be precipitated as a crystalline calcium silicate during the lime treatment stage.

### BRIEF DESCRIPTION OF THE DRAWINGS

Notwithstanding any other forms which may fall within the scope of the apparatus and method as set forth in the Summary, specific embodiments will now be described, by way of example only, with reference to the accompanying drawings in which:
Figure 1 is the Goldschmidt Periodic Table;
Figure 2 shows a flowsheet for a first embodiment of a selective recovery process;
Figure 3 shows a flowsheet for a second embodiment of a selective recovery process.
Figure 4 is a graph of % copper extraction vs time for chalcopyrite leaching in alkaline glycine solutions at leaching conditions: 0.1 M Glycine, Room Temperature (23°C), pH 10.5, controlled dissolved oxygen (DO) level.
Figure 5: is a graph of % copper extraction vs time for chalcopyrite concentrate leaching for different peroxide concentrations. Leaching conditions: 0.1M glycine, % H₂O₂, pH 10.5, 60 °C.
Figure 6: is a graph of % copper extraction vs time for chalcopyrite concentrate leaching at different temperatures. Leaching conditions: 0.1M glycine, 2.5% H₂O₂, pH 10.5
Figure 7: is a graph of Zn concentration (mg/L) vs time for sphalerite leaching in glycine solutions. Conditions: Glycine: 60 g/l, H₂O₂: 0.48%, Mineral: 10 g/l.
Figure 8: is a graph of Pb concentration (mg/L) vs time for galena leaching in glycine solutions at two different pH values. Conditions: Glycine: 60 g/l, H₂O₂: 0.48%, Mineral: 10 g/l.
Figure 9 is a graph of % copper extraction vs time for malachite leaching in glycine solutions at different peroxide concentrations.
Figure 10 is a graph of % copper extraction vs time for malachite leaching in glycine solutions at various glycine to copper ratios.
Figure 11 is a graph of % copper extraction vs time for chalcopyrite leaching in alkaline barren glycine solutions at controlled DO (20 ppm), room temperature (23°C) and pH 10.5.
Figure 12 is a graph showing the extraction of gold from a gravity gold concentrate, using cyanide only compared to using glycine in alkaline solution with copper cyanide as a catalyst.

### DETAILED DESCRIPTION OF SPECIFIC EMBODIMENTS

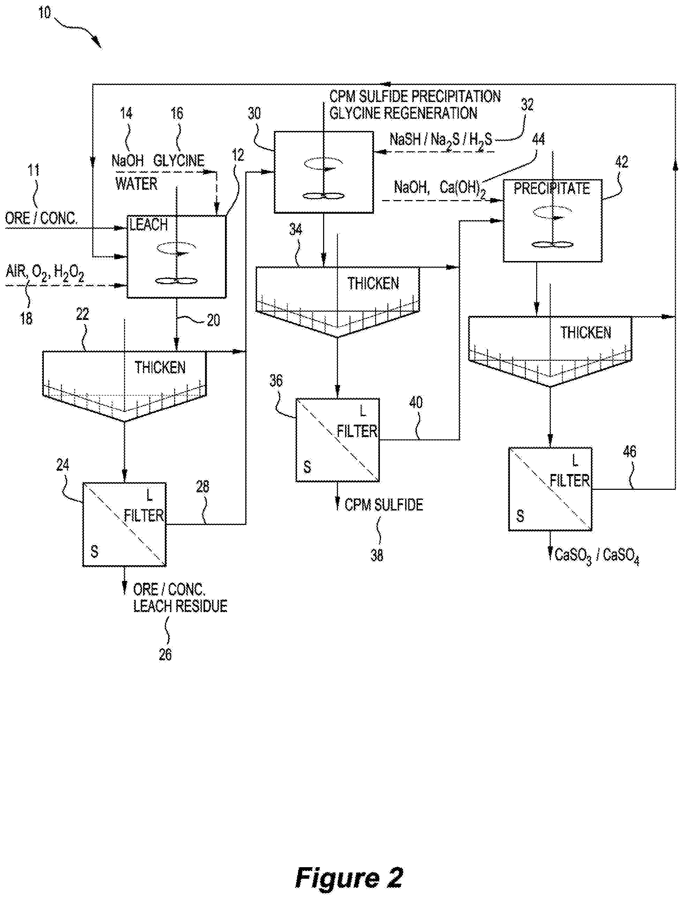

An example of a first embodiment of a flowsheet for the present process to treat CPM containing ores in the MAS range, where the CPM may be mineralised in a mixture of mineral types but with sulfide CPM minerals as the predominant type of CPM mineralisation, is shown in Figure 2. Figure 2 shows the process flowsheet 10 for the treatment of ores/concentrates 11 containing chalcophile metals (CPMs) with significant CPM sulfide mineralisation. The ores/ concentrates 11 may be pre-treated such as by ultrafine grinding and/or with alkaline pre-conditioning prior to glycine addition, which may enhance the effects of leaching. Leaching 12 is conducted using NaOH 14 (or KOH) and glycine 16 in the presence of an oxidant 18 (eg, air/O₂ or H₂O₂). The leach slurry 20 is thickened 22 and filtered 24 to produce a filtered leach residue 26 and pregnant leach solution 28. The PLS 28 is treated in a first precipitation step 30 for metal recovery and glycine recovery by NaSH 32 or Na₂S or H₂S addition. The resulting CPM sulfide product slurry is again thickened 34 and filtered 36 to produce the final CPM sulfide product 38. The filtrate 40 is treated with hydroxide 44 (eg, NaOH, Ca(OH)₂) in a second precipitation step 42 for calcium sulfate/sulfite precipitation.

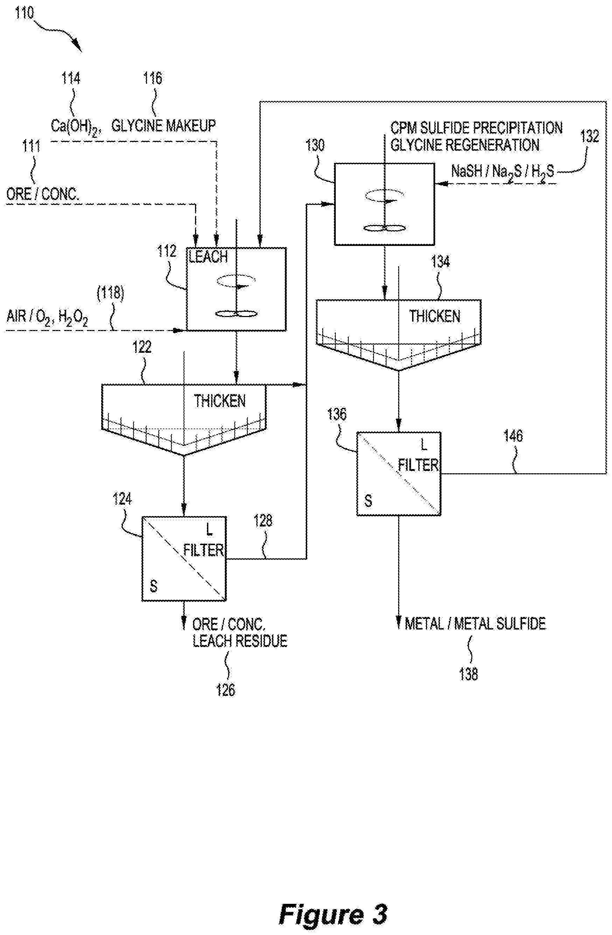

Figure 3 shows a second embodiment of a flowsheet for treating CPM containing ores or concentrates in which like reference numerals refer to like steps. Figure 3 shows how the process flowsheet 110 can be simplified for CPM-containing ores which do not have significant CPM sulfide mineralisation, but rather in the form of oxides, carbonates, halides, hydroxides, etc. When CPM is mineralised predominantly in non-sulfide forms, the flowsheet may be simplified as shown in Figure 3. The addition of oxidant (118) may be optional, depending on the degree of oxidation of the CPM containing ore/concentrate. Another difference from the first embodiment 10 is that the second embodiment 110 does not include the second precipitation step 42. Again, the metal recovery and glycine recovery is by NaSH addition.

In the second embodiment 110, lime suspension and/or milk of lime (Ca(OH)₂) 114 can be added directly to the leach step 112 (instead of sodium/potassium hydroxide as in the first embodiment 10). The pretreatment step may also be eliminated and caustic soda (sodium hydroxide) regeneration may be eliminated. As calcium hydroxide is normally a less expensive reagent than alkali metal hydroxide (such as sodium hydroxide), and no sulfide is oxidised to sulfate and sulfite, no caustic regeneration and calcium sulfate/sulfite precipitation is required.

The CPM Sulfide Precipitation step in Figures 2 and 3 can be replaced by any of the following:
- Direct electrowinning to crude electroplated metal (at cathode).
- Hydrogen precipitation of metal granules/powders (hydrogen added in pressurised reactor vessel).
- Adsorption onto GAC, IX, MR resin, or into SX organic solvent after which the CPM is stripped/eluted into RAS which can again be recovered by CPM Sulfide Precipitation, to produce MSP, hydrogen precipitation to produce MMP or electrowinning to produce EWM, or other metal reduction or precipitation steps.

It is expected that lime consumption for the present process would be similar or less than the lime amounts used to neutralise acidic tailings from acid leach processes.

### LIST OF PREFERRED EMBODIMENTS

1. A process for the selective recovery of at least one Chalcophile Group Element ("CPM") as herein defined from a material containing the CPM and one or more non Chalcophile Group Elements ("NCE") as herein defined, said process including:
   (i) contacting the material with an alkaline solution containing a lixiviant comprising an amino acid or derivative thereof in order to selectively leach the CPM from the material to produce a CPM containing leachate and a NCE containing residue; and
   (ii) recovering the CPM from the leachate.
2. The process of embodiment 1, wherein the alkaline solution is substantially free from thiosulfate or ammonia containing species.
3. The process of embodiment 1 or 2, wherein the alkaline solution further includes an oxidant.
4. The process of any preceding embodiment, wherein the CPM comprises one or more of Co, Ni, Cu, Zn, Ga, Ge, Rh, Pd, Ag, Cd, In, Sn, Ir, Pt, Au, Hg, Tl, Pb and Bi.
5. The process of any preceding embodiment, wherein the CPM comprises one or more of Co, Ni, Zn, Ga, Ge, Rh, Pd, Ag, Cd, In, Sn, Ir, Pt, Hg, Tl, Pb and Bi.
6. The process of any preceding embodiment, wherein the alkaline solution has a pH in the range of 7 to 13, preferably in the range of 7 to 11.5, more preferably between 8 and 10.
7. The process of any preceding embodiment, wherein the amino acid comprises glycine.
8. The process of any preceding embodiment, wherein the amino acid concentration in solution is from 0.1 to 240 grams per litre, preferably from 3.75 grams per litre to 60 grams per litre.
9. The process of any preceding embodiment, further including a preconditioning step prior to step (i), comprising treatment of a passivating coating on the material with an alkaline solution of sulfurous acid and sulfite ions..
10. The process of any preceding embodiment, wherein the alkaline solution additionally includes a small amount of a catalyst selected from iodine and/or iodide, bromine and/or bromide, thiourea, copper salts, and cyanides, or mixtures thereof.
11. The process of embodiment 10 wherein the weight ratio of amino acid to the catalyst is not less than 2:1, preferably not less than 10:1.
12. The process of any preceding embodiment, wherein the alkaline solution has a dissolved oxygen (DO) concentration from 0.1-100 milligrams per litre in solution, such as from 8 to 30 mg/L.
13. The process of any preceding embodiment, wherein the alkaline solution additionally contains copper salts, such as cupric sulfate or copper cyanide.
14. The process of any preceding embodiment, wherein step (ii) includes regeneration of and recycling of the amino acid lixiviant to step (i).
15. A process for the selective recovery of at least one Chalcophile Group Element ("CPM") as herein defined from a material containing the CPM and one or more non Chalcophile Group Elements ("NCE") as herein defined, said process including:
   (i) contacting the material with an alkaline lixiviant that is substantially free from thiosulfate or ammonia containing species and that contains an amino acid or salt thereof in order to selectively leach the CPM from the material to produce a CPM containing leachate and a NCE containing residue; and
   (ii) recovering the CPM from the leachate.
16. A Chalcophile Group Element recovered using the process of embodiment 1 or 15.
17. A process for the selective recovery of at least one Chalcophile Group Element ("CPM") as herein defined from a material containing the CPM and one or more non Chalcophile Group Elements ("NCE") as herein defined, substantially as herein described with reference to the accompanying drawings.

### EXAMPLES

Non-limiting Examples of a process for the selective recovery of at least one Chalcophile Group Element are described below.

### Example 1. Chalcopyrite (CuFeS₂) leaching

Natural Chalcopyrite concentrate was leached in alkaline glycine solutions. The chalcopyrite had the following composition (wt %):

**Table 1: Concentration of metals in chalcopyrite**

| **Element** | Cu | As | Fe | Si | Ni | Al | Co | Pb | S |
|---|---|---|---|---|---|---|---|---|---|
| **Conc. (%) in chalcopyrite** | 22.6 | 0.167 | 23.1 | 4.27 | 0.005 | 0.293 | 0.076 | 0.072 | 23.1 |

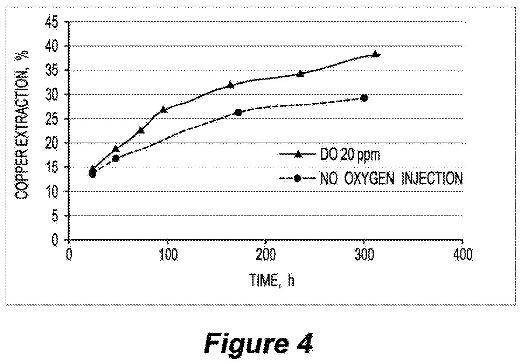

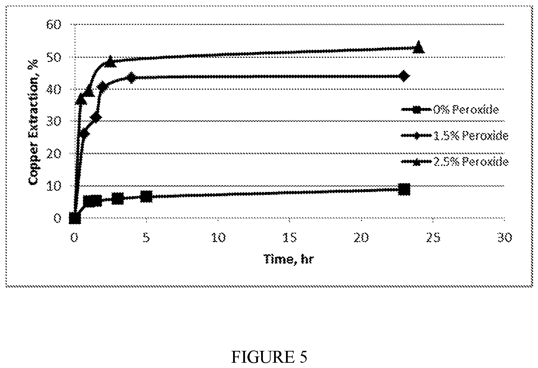

The effect of various levels of oxidant in the lixiviant is shown in Figures 4 and 5. Figure 4 shows the effect of increased dissolved oxygen (such as by injection of air or oxygen). The effect of varying hydrogen peroxide is shown in Figure 5. Both figures indicate increased copper dissolution with higher amounts of oxidant in solution. For example, at high dissolved oxygen (DO), or higher concentrations of oxidizing agents such as peroxide, the rate of copper extraction is higher than using air only as oxidant. Oxygenated solutions with high DO lead to faster extraction rates than with air alone.

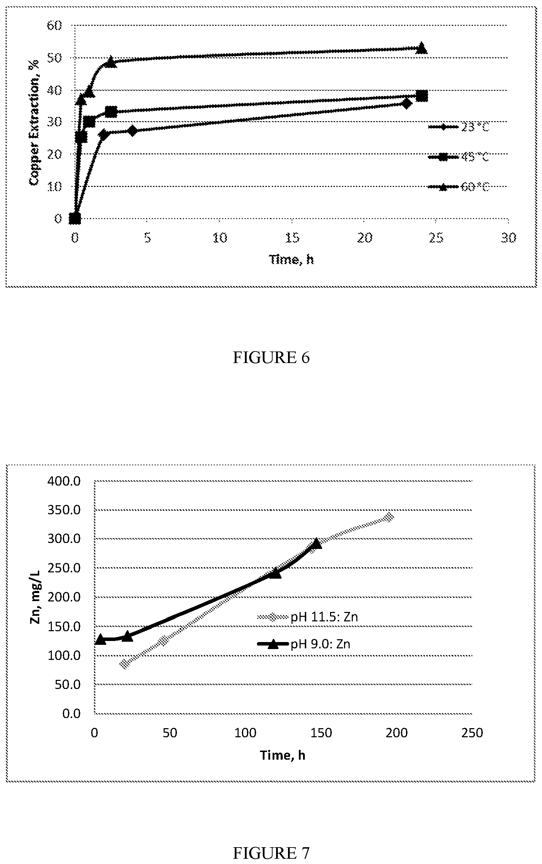

The effect of temperature on leaching is shown in Figure 6. There is a steady increase in copper solubility as the temperature of leaching increases from around room temperature to 60 °C. Higher temperatures therefore increase the rate of leaching of copper from its minerals.

The dissolution of copper and impurities after leaching is shown in Table 2.

**Table 2: Leach solution concentration of metals after leaching chalcopyrite in alkaline glycine solution.**

| **Element** | Cu | As | s | Fe | Si | Ni | Co | Pb | K | Mn | Mg | Al |
|---|---|---|---|---|---|---|---|---|---|---|---|---|
| **Conc (mg/l)** | 1243 | 9.13 | 952 | 11.4 | 2.76 | < 0.2 | 7.6 | 10.1 | 15.6 | <0.2 | 5.2 | <0.2 |

It is clear that whilst the CPM copper dissolves in the alkaline glycinate solution, the NCEs: iron, magnesium, aluminium, silicon do not dissolve to a great extent.

### Example 2. Leaching of sphalerite (zinc sulfide)

Sphalerite (zinc sulfide) was leached in alkaline glycine solutions under bottle roll condition with air as oxidant. The extraction of zinc as the leach proceeds over time for two different pH's are shown in Figure 7. Initially higher dissolution of zinc is evident at pH of 11.5, although the overall rate is slower than that at pH 9, meaning the same overall amount of Zn is leached after around 100 hours. It therefore appears that the lower pH favors Zn extraction kinetics, but only initially.

### Example 3. Leaching results from mixed galena (lead sulfide):

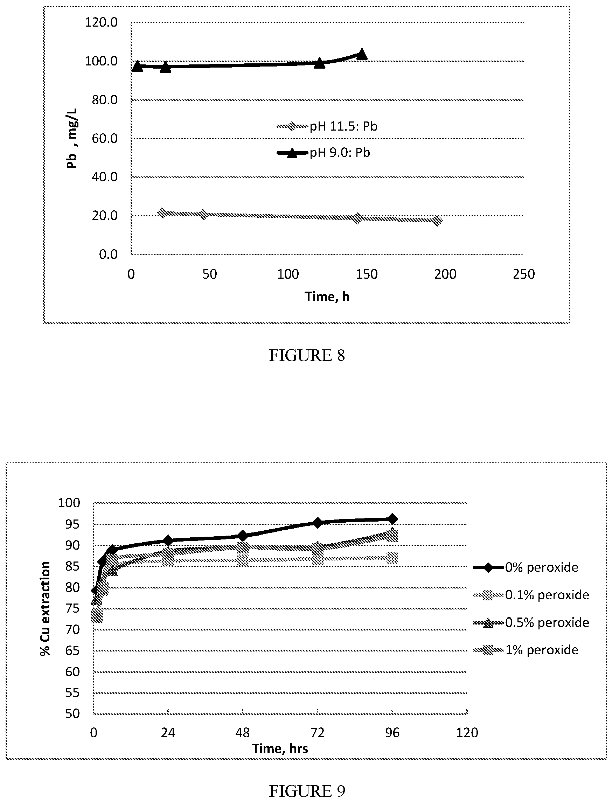

Galena (lead sulfide) was leached in alkaline glycine solutions under bottle roll condition with air as oxidant. The extraction of lead as the leach proceeds over time for 2 different pH's are shown in Figure 8. The Conditions of leaching were: Glycine: 60 g/l, H₂O₂: 0.48%, Mineral: 10 g/l. It can be seen that significantly higher Pb extraction was achieved at a pH of 9 as compared with a pH of 11.5. Lead extraction was therefore favored by slightly lower pH, although still remaining within MAS. Operation of the disclosed process within the MAS is very important to retain selectivity over the NCE's. If operation moves into the acidic region (eg, pH<7) it can start to dissolve metals and minerals indiscriminately, which is undesirable.

### Example 4. Leaching of malachite (copper carbonate):

A sample of natural malachite with hematite (Fe₂O₃), goethite (FeO(OH)) and quartz contaminants was leached under various glycine concentrations. A quantitiative X-Ray diffraction diffractogram confirmed the mineralogy of the malachite ore to be:

| XRD-Analysis | Phase | Goethite | Hematite | Malachite | Quartz | Amorphous Content |
|---|---|---|---|---|---|---|
| | weight % | 1.7 | 3.3 | 66 | 16.7 | 12 |

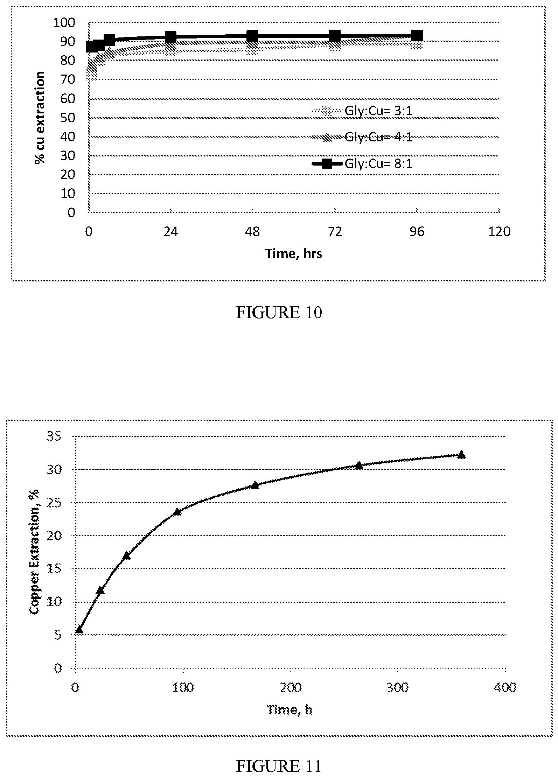

The effects of peroxide concentrations and glycine to copper ratios on copper extraction are given in Figures 9 and 10. Figure 9 shows copper extraction from malachite leaching in glycine solutions at different peroxide concentrations. The effect of various glycine to copper ratios on malachite leaching is given in Figure 10. When peroxide is used as an oxidant, copper extraction is enhanced with increasing peroxide concentration from 0.1% to 1% peroxide. In the system without peroxide, air was still present as an oxidant and under the particular conditions illustrated, the steady ingress of air was effective for copper extraction. Figure 10 shows an increase in solubility as the glycine concentration increases from 3:1 to 8:1. While increasing the glycine: CPM ratio favors extraction of copper intially, the final extraction of copper is sufficient at a 50% stoichiometric excess.

### Example 5. Leaching of cobalt-bearing nickel laterite

This example gives the end result after 90 hours of leaching in glycine solution in the MAS pH range, and shows the dissolution of CPMs and the relative non-dissolution ofNCE's:

**Table 3: Leach solution concentration of metals after leaching laterite in alkaline glycine solution.**

| **Category** | **CPM** | **NCE** | **NCE** | **NCE** | **CPM** | **NCE** | **NCE** | **NCE** | **NCE** | **NCE** | **NCE** | **CPM** | **NCE** | **NCE** |
|---|---|---|---|---|---|---|---|---|---|---|---|---|---|---|
| **Element** | **Co** | **Ca** | **Mg** | **Fe** | **Ni** | **Si** | **Zr** | **Al** | **Sr** | **Ti** | **Ba** | **S** | **Cr** | **Mo** |
| **Solution Concentration (mg/l)** | 80 | 2.5 | 0.3 | 3.0 | 77.0 | 2.0 | <0.02 | 3.0 | <0.02 | <0.02 | 0.4 | 250 | 0.1 | <0.02 |

**Table 4. The laterite had the following composition (wt % for each element):**

| **Si** | **Mg** | **Fe** | **Ni** | **Al** | **Ca** | **Mn** | **Cr** | **Zn** | **Na** | **Cu** | **Co** | **Ti** |
|---|---|---|---|---|---|---|---|---|---|---|---|---|
| 9.29 | 6.91 | 30.73 | 1.55 | 2.71 | 0.17 | 0.55 | 1.44 | 0.03 | 0.03 | 0.01 | 0.08 | 0.05 |

It is clear that while silicon, magnesium, iron and aluminium predominate while cobalt and nickel are at low concentration levels in the laterite ore, the final leach solution contains mostly nickel and cobalt in solution, showing the selective leaching of these elements.

### Example 6. Precipitation and recovery of copper from copper glycinate solutions with NaSH (sodium bisulfide / sodium hydrogen sulfide) and glycinate/glycine reuse for leaching

Stoichiometric addition of NaSH solution to a copper glycinate solution, with NaSH in a 1:1 molar ratio to the copper in solution, lead to precipitation of 99.1% of the copper to form a covellite precipitate, as confirmed by X-Ray diffractogram.

The copper can be recovered from glycine solution by sulfide (NaSH) precipitation. Sulfide ions have been added to the pregnant liquor in different Cu: S²⁻ molar ratios in order to recover copper from the glycine solution. The copper recovery reaches up to 99.1% as copper sulfide at Cu: S²⁻ molar ratio of 1: 0.70 in only 10 minutes contact time. Table 5 shows the copper concentration in the leach solution before and after NASH precipitation. The barren solution after NASH precipitation containing 12.5 mg/L copper-glycinate has been used to leach copper from fresh chalcopyrite concentrate. The barren solution was found to leach copper from chalcopyrite at a similar rate to that of the fresh solution (Figure 11), illustrating the ability to reuse the solution. The conditions of leach in Figure 11 are: alkaline barren glycine solutions at controlled DO (20 ppm), room temperature (23°C) and pH 10.5.

**Table 5: Copper concentration in the leach solution before and after sulfide (NASH) precipitation.**

| **Sample ID** | Cu, mg/L |
|---|---|
| Before precipitation | 1243 |
| After precipitation Cu: S²⁻ Molar ratio of 1 : 0.70 | 11.5 |
| After precipitation Cu:S²⁻ Molar ratio of 1 : 0.50 | 226.3 |

### Example 7. Recovery of copper from copper glycinate leach solution using solvent extraction and stripping.

This serves as an example of the extraction of copper (or other CPMs) from its glycinate solution using solvent extraction and stripping. Sometimes, the low copper (or other CPMs) concentration in the final leach solution from chalcopyrite may not be at a suitable concentration for copper recovery by either electrowinning or sulfide precipitation. The application of solvent extraction (SX) may be required to get high copper (or other CPMs) concentration to be suitable for any further copper (or other CPMs) recovery processes. Solvent extraction (SX) experiments show that copper glycinate (or other MGC's) can be easily extracted from the alkaline aqueous medium (Aq) using a 10% (v/v) LIX 841 in ShellSol D70. Copper extraction reaches up to 99.4% and high copper extraction was obtained at different equilibrium pHs. The stripping of the organic phase (Or) in sulfuric acid shows also that all the copper can be stripped back in sulfuric acid medium (so that it can be electrowon using conventional electrowinning technology if required). Table 6 shows the copper extraction from aqueous medium and the stripping of copper from organic medium.

**Table 6 Copper extraction from copper glycinate aqueous (Aq) solution using LIX 841 at 40 °C and 1:1 Or/Aq ratio.**

| **Concentration in Aq, (mg/L)** | | | **Extraction, (%)** | **Stripping, (%)** |
|---|---|---|---|---|
| Sample ID | **Equip. pH** | **Cu** | **Cu** | **Cu** |
| Feed | 11.5 | 3596 | | |
| Test 1 | 8.8 | 43.9 | 98.8 | - |
| Test 2 | 9.4 | 65.6 | 98.2 | 100 |
| Test 3 | 10 | 22.3 | 99.4 | 100 |

### Example 8. Selective leaching of platinum group metals, nickel and copper from a PGM ore

An ore material containing nickel, copper and platinum and having the chemical and mineralogical composition shown in Table 7 was ground to a particle size of P80= 67 micron. Samples were leached in an alkaline glycine solution at a solids density of 10wt% whilst stirring the solution at a rotational rate of 600 rpm and under varying conditions of glycine concentration, solution temperature, pH and oxygen flow rate. The results of four leaches are identified as Experiments 1 to 4 and are set out in Tables 8 to 11, respectively.

**Table 7 Chemical and Mineralogical Composition of Ore Material**

| **Chemical analysis** | **Drum 1** | **Drum 2** | **Mineralogical analysis** | **Drum 1** | **Drum 2** |
|---|---|---|---|---|---|
| | **Content (%)** | | | **Content (%)** | |
| Fe | 13.50 | 13.60 | **Major phases** | | |
| Cr | 9.30 | 10.40 | Chromite (FeCr2O₄) | 73.89 | 78.12 |
| Mg | 6.9450 | 7.18 | Chlorite - Clinochlore [(Mg,Fe,Li)₆AlSi₃O₁₀(OH)₈]-[(Mg,Fe²⁺)₅Al₂Si₃O₁₀(OH)₈] | 16.55 | 11.16 |
| Al | 5.1100 | 5.35 | | | |
| Ca | 0.4070 | 0.42 | | | |
| Ti | 0.2630 | 0.3190 | | | |
| Na | 0.02375 | 0.0310 | | | |
| Ni | 0.2950 | 0.31 | | | |
| Mn | 0.2310 | 0.23 | | | |
| Zn | 0.1170 | 0.12 | | | |
| Cu | 0.0648 | 0.0646 | | | |
| **Si*** | **3.61** | **2.64** | | | |
| **S*** | **0.37** | **0.78** | | | |
| **C*** | **0.04** | **0.11** | | | |
| V | 0.0551 | 0.0609 | | | |
| Co | 0.03175 | 0.0314 | | | |
| As | 0.0157 | 0.0185 | | | |

| **Content (g/t)** | | | **Minor phases** | **Content (%)** | |
|---|---|---|---|---|---|
| P | 31.35 | 51.4 | Olivine (Mg²⁺,Fe²⁺)₂SiO₄ | 3.63 | 3.23 |
| Ga | 33.6 | 34 | Ferrotschermakite Ca₂[(F e²⁺,Mg)₃Al₂](Si₆Al₂)O₂₂(OH)₂ | 2.59 | 1.95 |
| Sr | 24.8 | 28.1 | Pentlandite [(Fe,Ni)₉S₈] | 0.51 | 1.51 |
| Se | 5.59 | 16.1 | Ankerite [Ca(Fe,Mg,Mn)(CO₃]₂ | 0.38 | 0.91 |
| Pd | 6.56 | 15.20 | Chalcopyrite (CuFeS₂) | 0.54 | 0.65 |
| Pt | 7.11 | 12.80 | Magnesiogedrite [(Mg, Fe²⁺)₅Al₂Si₆Al₂O₂₂(OH)₂] | 0.71 | 0.62 |
| Sc | 10.7 | 12.3 | Hematite/Magnetite [Fe₂O₃/Fe₃O₄] | 0.17 | 0.25 |
| Pb | 7.34 | 6.42 | | | |
| Te | 5.385 | 5.73 | | | |
| Ba | 4.66 | 5.44 | | | |
| Zr | 4.975 | 5.41 | | | |
| Sb | 4.895 | 5.23 | | | |
| **Chemical analysis** | **Drum 1** | **Drum 2** | **Mineralogical analysis** | **Drum 1** | **Drum 2** |
| | **Content (g/t)** | | | **Content (%)** | |
| Y | 0.911 | 1.09 | **Traces phases** | | |
| Sn | 1.615 | 1.05 | Chromferide [Fe₃Cr₁₋ₓ(x=0,6)] | 0.03 | 0.02 |
| Nd | 0.754 | 0.99 | Molten Lead | 0.41 | 0.26 |
| La | 0.677 | 0.905 | Rammelsbergite (NiAs₂) | 0.10 | 0.80 |
| Rb | 0.615 | 0.708 | Columbite [(Fe,Mn)Nb₂O₆] | 0.32 | 0.23 |
| Nb | 0.575 | 0.698 | Ilmenite (FeTiO₃) | 0.09 | 0.06 |
| Ru | 0.557 | 0.659 | Garnet - Pyrope | 0.01 | 0.01 |
| | | | [X₃²⁺Y₂³⁺Si₃O₁₂]-[Mg₃Al₂(SiO₄)₃] | | |
| | | | X represents Ca, Fe²⁺, Mn or Mg | | |
| | | | Y represents Al, Cr or Fe ³⁺ | | |
| Th | 0.373 | 0.629 | Bornite (Cu₅FeS₄) | 0.01 | 0.10 |
| Ta | 0.463 | 0.615 | Calcite (CaCO₃) | 0.00 | 0.01 |
| Au | 3.67 | 0.56 | Chalcopyrite + As | 0.01 | 0.03 |
| Dy | 0.319 | 0.519 | Lautite (CuAsS) | 0.00 | 0.01 |
| Gd | 0.272 | 0.427 | Enstatite (Mg₂Si₂O₆) | 0.01 | 0.00 |
| Ag | 0.681 | 0.378 | Covellite (CuS) | 0.00 | 0.02 |
| Er | 0.196 | 0.348 | Oregonite (S-bearing) [Ni₂FeAs₂] | 0.01 | 0.01 |
| Sm | 0.224 | 0.332 | Chalcocite (CU₂S) | 0.00 | 0.01 |
| Cs | 0.262 | 0.323 | Sperrylite (PtAs₂) | 0.00 | 0.02 |
| Tb | 0.212 | 0.316 | Albite (NaAlSi₃O₈) | 0.00 | 0.01 |
| Yb | 0.163 | 0.295 | Biotite K(Mg,Fe)₃(AlSi₃O₁₀)(F,OH)₂ | 0.01 | 0.00 |
| Pr | 0.222 | 0.292 | | | |
| Mo | 0.220 | 0.244 | | | |
| U | 0.232 | 0.238 | | | |
| Cd | 0.200 | 0.168 | | | |
| Hf | 0.143 | 0.16 | | | |
| Ho | < 0.100 | 0.116 | | | |
| W | 4.305 | 2.44 | | | |
| Ce | 1.75 | 2.34 | | | |
| Bi | 1.87 | 1.66 | | | |
| Ge | 1.25 | 1.33 | | | |
| K | < 0.100 | < 0.100 | | | |

| | | | | | |
|---|---|---|---|---|---|
| * From Tescan analysis | | | | | |

**Table 8 Experiment 1 Leach Results**

| **EXPERIMENT 1** | | | | | | | |
|---|---|---|---|---|---|---|---|
| Mass solid: 100 g | | | [Glycine]: 40 g/L | | | | |
| Solution volume: 1000 mL | | | Temperature of the solution: 60°C | | | | |
| Solid density: 10% | | | Rotational rate: 600 rpm | | | | |
| Alkalinity level (pH): 11 | | | Oxygen flow rate: 500 mL/min | | | | |
| **Leaching time (hour)** | | **0** | **3** | **24** | **48** | **72** | **96** |
| **LEACH SOLUTION (ppm)** | Cu(II) | 0 | 28.5 | 40.5 | 46.5 | 51.5 | 57.5 |
| | Ni(II) | 0 | 127 | 146 | 159 | 174 | 189 |
| | Cr(III) | 0 | 1 | 0.5 | 0.5 | 0.5 | 1 |
| | Fe(II) | 0 | 0.5 | 0.5 | 0.5 | 0.5 | 0.5 |
| | Pt(II) | 0 | 0.001 | 0.002 | 0.002 | 0.001 | 0.001 |
| | Pd(II) | 0 | 0.027 | 0.118 | 0.193 | 0.233 | 0.28 |
| **PERCENTAGE EXTRACTION** | Cu(II) | 0.00 | 47.50 | 67.16 | 76.73 | 84.55 | 93.44 |
| | Ni(II) | 0.00 | 45.36 | 51.88 | 56.22 | 61.21 | 65.81 |
| | Cr(III) | 0.00 | 0.01 | 0.00 | 0.00 | 0.00 | 0.01 |
| | Fe(II) | 0.00 | 0.00 | 0.00 | 0.00 | 0.00 | 0.00 |
| | Pt(II) | 0.00 | 0.28 | 0.55 | 0.55 | 0.27 | 0.27 |
| | Pd(II) | 0.00 | 6.57 | 28.57 | 46.49 | 55.84 | 66.42 |

**Table 9 Experiment 2 Leach Results**

| **EXPERIMENT 2** | | | | | | | |
|---|---|---|---|---|---|---|---|
| Mass solid: 100 g | | | [Glycine]: 10 g/L | | | | |
| Solution volume: 1000 mL | | | Temperature of the solution: 40°C | | | | |
| Solid density: 10% | | | Rotational rate: 600 rpm | | | | |
| Alkalinity level (pH): 11 | | | Oxygen flow rate: 500 mL/min | | | | |
| **Leaching time (hour)** | | **0** | **3** | **24** | **48** | **72** | **96** |
| **LEACH SOLUTION (ppm)** | Cu(II) | 0 | 19 | 29 | 34 | 37 | 38.5 |
| | Ni(II) | 0 | 92.5 | 132 | 140 | 144 | 144 |
| | Cr(III) | 0 | 0.5 | 0.5 | 0.5 | 0.5 | 0.5 |
| | Fe(II) | 0 | 0.5 | 0.5 | 0.5 | 0.5 | 0.5 |
| | Pt(II) | 0 | 0.001 | 0.001 | 0.001 | 0.001 | 0.001 |
| | Pd(II) | 0 | 0.001 | 0.006 | 0.018 | 0.03 | 0.047 |
| | | | | | | | |
| **PERCENTAGE EXTRACTION** | Cu(II) | 0.00 | 31.67 | 48.09 | 56.10 | 60.74 | 62.56 |
| | Ni(II) | 0.00 | 33.04 | 46.91 | 49.50 | 50.66 | 50.14 |
| | Cr(III) | 0.00 | 0.00 | 0.00 | 0.00 | 0.00 | 0.00 |
| | Fe(II) | 0.00 | 0.00 | 0.00 | 0.00 | 0.00 | 0.00 |
| | Pt(II) | 0.00 | 0.28 | 0.27 | 0.27 | 0.27 | 0.27 |
| | Pd(II) | 0.00 | 0.24 | 1.45 | 4.34 | 7.19 | 11.15 |

**Table 10 Experiment 3 Leach Results**

| **EXPERIMENT 3** | | | | | | | |
|---|---|---|---|---|---|---|---|
| Mass solid: 100 g | | | [Glycine]: 40 g/L | | | | |
| Solution volume: 1000 mL | | | Temperature of the solution: 80°C | | | | |
| Solid density: 10% | | | Rotational rate: 600 rpm | | | | |
| Alkalinity level (pH): 12.5 | | | Oxygen flow rate: 500 mL/min | | | | |
| **Leaching time (hour)** | | **0** | **3** | **24** | **48** | **72** | **96** |
| **LEACH** | Cu(II) | 0 | 31.5 | 46 | 53.5 | 65.5 | 78 |
| | Ni(II) | 0 | 130 | 155 | 182 | 215 | 257 |
| | Cr(III) | 0 | 1 | 1.5 | 1.5 | 2.5 | 3 |
| **SOLUTION (ppm)** | Fe(II) | 0 | 0.5 | 0.5 | 0.5 | 0.5 | 0.5 |
| | Pt(II) | 0 | 0.001 | 0.001 | 0.004 | 0.004 | 0.013 |
| | Pd(II) | 0 | 0.143 | 0.398 | 0.488 | 0.603 | 0.735 |
| | | | | | | | |
| **PERCENTAGE EXTRACTION** | Cu(II) | 0.00 | 52.50 | 72.83 | 57.96 | 56.77 | 67.60 |
| | Ni(II) | 0.00 | 46.43 | 52.59 | 42.25 | 39.93 | 47.73 |
| | Cr(III) | 0.00 | 0.01 | 0.01 | 0.01 | 0.01 | 0.01 |
| | Fe(II) | 0.00 | 0.00 | 0.00 | 0.00 | 0.00 | 0.00 |
| | Pt(II) | 0.00 | 0.28 | 0.26 | 0.72 | 0.57 | 1.87 |
| | Pd(II) | 0.00 | 34.79 | 92.00 | 77.18 | 76.29 | 92.99 |

**Table 11 Experiment 4 Leach Results**

| **EXPERIMENT 4** | | | | | | | |
|---|---|---|---|---|---|---|---|
| Mass solid: 100 g | | | [Glycine]: 40 g/L | | | | |
| Solution volume: 1000 mL | | | Temperature of the solution: 80°C | | | | |
| Solid density: 10% | | | Rotational rate: 600 rpm | | | | |
| Alkalinity level (pH): 12.5 | | | Oxygen flow rate: 0 L/min | | | | |
| **Leaching time (hour)** | | **0** | **3** | **24** | **48** | **72** | **96** |
| **LEACH SOLUTION (ppm)** | Cu(II) | 0 | 25.5 | 40 | 45 | 47.5 | 49 |
| | Ni(II) | 0 | 106 | 152 | 166 | 180 | 201 |
| | Cr(III) | 0 | 0.5 | 0.5 | 0.5 | 1.5 | 2 |
| | Fe(II) | 0 | 0.5 | 0.5 | 0.5 | 0.5 | 0.5 |
| | Pt(II) | 0 | 0.001 | 0.002 | 0.004 | 0.004 | 0.004 |
| | Pd(II) | 0 | 0.086 | 0.393 | 0.402 | 0.366 | 0.353 |
| | | | | | | | |
| **PERCENTAGE EXTRACTION** | Cu(II) | 0.00 | 42.50 | 66.33 | 71.25 | 67.29 | 61.25 |
| | Ni(II) | 0.00 | 37.86 | 54.01 | 56.32 | 54.64 | 53.84 |
| | Cr(III) | 0.00 | 0.00 | 0.00 | 0.00 | 0.01 | 0.01 |
| | Fe(II) | 0.00 | 0.00 | 0.00 | 0.00 | 0.00 | 0.00 |
| | Pt(II) | 0.00 | 0.28 | 0.55 | 1.05 | 0.94 | 0.83 |
| | Pd(II) | 0.00 | 20.92 | 95.14 | 92.92 | 75.69 | 64.42 |

The results show selective leaching of the targeted metals platinum, palladium, nickel and copper from a PGM ore, over iron and chromium. Selective extraction of the target metals was enhanced by elevated temperatures and in the presence of an oxidant. However, in all cases, minimal dissolution of the NCEs Cr and Fe occurred.

### Example 9. Extraction of metals from electronic scrap (e-waste).

Printed circuit boards having the composition set out in Table 12 were ground to a particle size of 80% passing 106 micron and leached using alkaline glycine solutions at room temperature and in a bottle being rolled at 100 rpm, with the bottle neck open to air. Aside from any incidental introduction of air via the open bottle neck there was no deliberate addition of oxidant to the system. The ground e-waste contained both CPMs (Au, Pt, Ag, Pd, Pb, Ni, Co, Zn and Cu) as well as NCEs (Fe, Cr and Al)

The leach conditions are set out in Table 13. The concentration of glycine in the alkaline leaching solution was 30 g/L and the pH was 11. The ratio of solids (e-waste) to alkaline leachant was approximately 4 g solids per litre of leachnat. The temperature was ambient, at approximately 23 °C.

The resulting concentrations and percentage extractions of the CPMs Au, Ag, Zn, Pb, Cu and Ni leached from the circuit boards are presented in Table 14. All CPMs were able to be extracted without significant dissolution of the NCEs. Under the conditions of this Example, there was higher extraction of Zn, Pb and Cu as compared with Au, Ag and Ni.

**Table 12**

| **Metal** | **Unit** | **Content** |
|---|---|---|
| **Au** | ppm | **368** |
| **Pt** | ppb | **65** |
| **Ag** | ppm | **557** |
| **Pd** | ppm | **55** |
| **Al** | % | **6.4** |
| **Fe** | % | **2.5** |
| **Pb** | ppm | **26700** |
| **Cu** | % | **55.2** |
| **Ni** | ppm | **3560** |
| **Co** | ppm | **20** |
| **Cr** | ppm | **70** |
| **Zn** | % | **5.8** |

**Table 13**

| Reagent | Units | Amount |
|---|---|---|
| Glycine | g | 15 |
| Water | mL | 500 |
| E-waste | g | 2.001 |
| NaOH | g | 7.2 |
| pH | | 11 |
| Temp | C | RT ^{∼}23 |

**Table 14**

| **Sample** | **Au** | **Ag** | **Zn** | **Pb** | **Cu** | **Ni** |
|---|---|---|---|---|---|---|
| Time, hour | mg/L | ug/L | mg/L | mg/L | mg/L | mg/L |
| 2 | 0.001 | 17 | 23.6 | 113 | 61.2 | <0.1 |
| 4 | 0.002 | 28 | 43.2 | 175 | 404 | 0.4 |
| 6 | 0.007 | 95 | 120 | 230 | 701 | 0.8 |
| 24 | 0.005 | 62 | 165 | 338 | 1490 | 0.8 |
| Ext, kg/t | **0.001** | **0.0155** | **41.2** | **84.5** | **372.3** | **0.2** |
| Ext, % | **0.34** | **1.73** | **80.94** | **76.50** | **72.52** | **6.49** |

### Example 10: Extraction of metals from electronic scrap using glycine with cyanide as catalyst.

Printed circuit boards having the composition (metals only) set out in Table 15 were ground to a particle size of 80% passing 106 micron and leached using alkaline glycine solutions including a small quantity of cyanide as a catalyst. The ratio of glycine to cyanide was approximately 58:1. The leach was conducted at room temperature and in a bottle being rolled at 100 rpm, with the bottle neck open to air. Aside from any incidental introduction of air via the open bottle neck there was no deliberate addition of oxidant to the system. The ground e-waste contained both CPMs (Au, Pt, Ag, Pd, Pb, Ni, Co, Zn and Cu) as well as NCEs (Fe, Cr and Al)

The leach conditions are set out in Table 16. The concentration of glycine in the alkaline leaching solution was 30 g/L and the pH was 11. The ratio of solids (e-waste) to alkaline leachant was approximately 4 g solids per litre of leachant. The temperature was ambient, at approximately 23 °C.

The resulting concentrations and percentage extractions over time of Au, Ag, Zn, Pb, Cu and Ni leached from the circuit boards are presented in Table 17. As can be seen by comparison with Example 9, the percent extractions for all metals except Pb increased significantly over a given time period, indicating the catalytic effect of CN on the rate of leaching.

**Table 15**

| **Metal** | **Unit** | **Content** |
|---|---|---|
| **Au** | ppm | **368** |
| **Pt** | ppb | **65** |
| **Ag** | ppm | **557** |
| **Pd** | ppm | **55** |
| **Al** | % | **6.4** |
| **Fe** | % | **2.5** |
| **Pb** | ppm | **26700** |
| **Cu** | % | **55.2** |
| **Ni** | ppm | **3560** |
| **Co** | ppm | **20** |
| **Cr** | ppm | **70** |
| **Zn** | % | **5.8** |

**Table 16**

| Reagent | Units | Amount |
|---|---|---|
| Glycine | g | 15 |
| NaCN | g | 0.257 |
| Water | mL | 500 |
| E-waste | g | 2.003 |
| NaOH | g | 7.0 |
| pH | | 11 |

**Table 17**

| **Element** | **Au** | **Ag** | **Zn** | **Pb** | **Cu** | **Ni** |
|---|---|---|---|---|---|---|
| **Time, hour** | **µg/L** | **µg/L** | **mg/L** | **mg/L** | **mg/L** | **mg/L** |
| **2** | 83.7 | 66 | 54.5 | 69.7 | 199 | 0.5 |
| **4** | 373 | 168 | 125 | 99.8 | 571 | 1.1 |
| **6** | 380 | 156 | 152 | 96.9 | 739 | 1.2 |
| **24** | 400 | 88 | 258 | 82.2 | 1620 | 2.0 |
| **Ext, kg/t** | **0.099** | **0.0220** | **64.4** | **20.5** | **404.3** | **0.499** |
| **Ext, %** | **37.61** | **8.84** | **97.78** | **24.29** | **87.65** | **20.68** |

### Example 11: Extraction of gold using glycine with sparsely soluble copper cyanide added as catalyst.

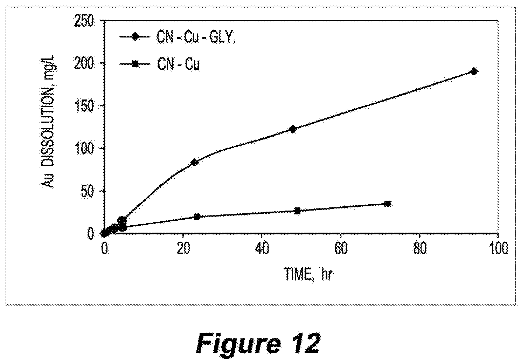

This example shows the effect of adding water-insoluble CuCN (copper (mono) cyanide or copper cyanide) as a catalyst during the glycine leaching of gold. It is shown that the use of cyanide on its own as a lixiviant did not give a high gold leach rate, but the use of alkaline glycine in the presence of copper cyanide catalyst significantly improved the leach rate. Figure 12 shows the extraction of gold from a gravity-gold concentrate containing 0.2% gold and 3.7% Cu. The leach conditions are 7 g/L Glycine, 3.4 g/L CuCN at pH 11.0 (added NaOH 2.4 g/L), 10% solids at room temperature.

Whilst a number of specific process embodiments have been described, it should be appreciated that the process may be embodied in many other forms.

In the claims which follow, and in the preceding description, except where the context requires otherwise due to express language or necessary implication, the word "comprise" and variations such as "comprises" or "comprising" are used in an inclusive sense, i.e. to specify the presence of the stated features but not to preclude the presence or addition of further features in various embodiments of the apparatus and method as disclosed herein.

## Claims

1. A process for the selective recovery of at least one Chalcophile Group Element ("CPM") as herein defined from a material containing the CPM and one or more non Chalcophile Group Elements ("NCE") as herein defined, said process including:
(i) contacting the material with an alkaline solution containing a lixiviant comprising an amino acid or derivative thereof in order to selectively leach the CPM from the material to produce a CPM containing leachate and a NCE containing residue; and
(ii) recovering the CPM from the leachate,
wherein the CPMs comprise Co, Ni, Cu, Zn, Ga, Ge, Rh, Pd, Cd, In, Sn, Ir, Pt, Hg, Tl, Pb and Bi and wherein the alkaline solution additionally includes a small amount of a catalyst selected from iodine and/or iodide, bromine and/or bromide, thiourea, and cyanides, or mixtures thereof.

2. A process for the selective recovery of at least one Chalcophile Group Element ("CPM") as herein defined from a material containing the CPM and one or more non Chalcophile Group Elements ("NCE") as herein defined, said process including:
(i) contacting the material with an alkaline solution that is substantially free from thiosulfate or ammonia containing species and that contains a lixiviant comprising an amino acid or derivative thereof in order to selectively leach the CPM from the material to produce a CPM containing leachate and a NCE containing residue; and
(ii) recovering the CPM from the leachate,
wherein the CPMs comprise Co, Ni, Cu, Zn, Ga, Ge, Rh, Pd, Ag, Cd, In, Sn, Ir, Pt, Au, Hg, Tl, Pb and Bi and wherein the alkaline solution additionally includes a small amount of a catalyst selected from iodine and/or iodide, bromine and/or bromide, thiourea, and cyanides, or mixtures thereof.

3. The process of claim 2, wherein the CPMs comprises Ag and/or Au.

4. The process of any preceding claim, wherein the alkaline solution further includes an oxidant.

5. The process of any preceding claim, wherein the alkaline solution has a pH in the range of 7 to 13, preferably in the range of 7 to 11.5, more preferably between 8 and 10.

6. The process of any preceding claim, wherein the amino acid comprises glycine.

7. The process of any preceding claim, wherein the catalyst comprises a cyanide.

8. The process of any preceding claim, wherein the amino acid concentration in solution is from 0.1 to 240 grams per litre, preferably from 3.75 grams per litre to 60 grams per litre.

9. The process of any preceding claim, further including a preconditioning step prior to step (i), comprising treatment of a passivating coating on the material with an alkaline solution of sulfurous acid and sulfite ions.

10. The process of any preceding claim wherein the weight ratio of amino acid to the catalyst is not less than 2:1, preferably not less than 10:1.

11. The process of any preceding claim, wherein the alkaline solution has a dissolved oxygen (DO) concentration from 0.1-100 milligrams per litre in solution, such as from 8 to 30 mg/L.

12. The process of any preceding claim, wherein the alkaline solution additionally contains copper salts, such as cupric sulfate or copper cyanide.

13. The process of any preceding claim, wherein step (ii) includes regeneration of and recycling of the amino acid lixiviant to step (i).

14. A Chalcophile Group Element recovered using the process of claim 1 or 2.
